# EUROPÄISCHE PATENTSCHRIFT

(11) **EP 2 620 790 B1**
(45) Veröffentlichungstag und Bekanntmachung des Hinweises auf die Patenterteilung: **16.11.2016**
(21) Anmeldenummer: 13152045.4
(22) Anmeldetag: 21.01.2013
(51) Int. Cl.: G02B 6/00, F21V 8/00, F21S 8/10

(54) **Leuchtanordnung für Fahrzeuge**
Lighting arrangement for vehicles
Dispositif lumineux pour véhicules

(30) Priorität: 25.01.2012 AT 792012
(43) Veröffentlichungstag der Anmeldung: 31.07.2013
(73) Patentinhaber: ZKW Group GmbH, 3250 Wieselburg (AT)
(72) Erfinder: Faffelberger, Anton, 3375 Krummnußbaum (AT)
(74) Vertreter: Patentanwaltskanzlei Matschnig & Forsthuber OG

(56) Entgegenhaltungen:
- DE-A1-102004 059 741
- DE-A1-102007 013 082
- US-A1- 2002 102 058
- US-A1- 2003 026 106
- US-A1- 2003 099 113

## Beschreibung

Die Erfindung bezieht sich auf eine Leuchtanordnung für Fahrzeuge, mit zwei Lichtleitern und einer Lichtquelle, wobei die Lichtquelle beiden Lichtleitern zu Einspeisung von Licht zugeordnet ist, die Lichtleiter zur Führung des Lichts und zur Abstrahlung von Licht auf Grund von an Innenseiten der Lichtleiter vorgesehenen Störstellen ausgebildet sind, die Lichtleiter von der gemeinsamen Einspeisestelle in einer Gabelung gekrümmt auseinanderlaufen und im Bereich der Gabelung an den einander zugewandten Außenseiten der beiden Lichtleiter wulstförmige Abstrahlstellen ausgebildet sind.

Leuchtstäbe werden im Fahrzeugbau vermehrt eingesetzt, wobei Licht, z.B. von Leuchtdioden, an einer Stirnfläche in einen Leuchtstab eingespeist wird. Das Licht wird im Inneren an den Begrenzungswänden des meist kreisrunden, gegebenenfalls aber auch einen anderen, z.B. elliptischen, Querschnitt aufweisenden Lichtleiters total reflektiert, jedoch an den Störstellen, die z.B. prismenartig ausgebildet sind, abgelenkt und im Wesentlichen an der den Störstellen gegenüberliegenden Seite abgestrahlt. Die Geometrie der Leuchtstäbe wird im KFZ-Bau oft durch Designvorgaben bestimmt, wobei sich die gewünschten Konturen oft nicht mehr durch einen einzigen Leuchtstab realisieren lassen und es in vielen Fällen erforderlich ist, einen Leuchtstab in zwei Äste aufzugabeln. Derartige Leuchtanordnungen werden im Rahmen der Erfindung betrachtet.

Nach dem Stand der Technik erfolgt dabei die Strahlaufteilung durch ein Luftprisma, wie z.B. nach der DE 101 58 336 B4, oder durch Aufteilen eines Lichtleiters in einer Gabelung ("Beamsplitter"), wie z.B. in der DE 101 62 105 A1, beschrieben.

In beiden Fällen ergeben sich Probleme hinsichtlich einer gleichmäßigen Leuchtdichte längs der Lichtleiter, vor allem im Bereich der Gabelung, wobei je nach Betrachtungswinkel unkontrollierbare Lichtflecken, vor allem aber dunkle Stellen auftreten. Bei einer Strahlaufteilung durch ein Luftprisma ist dieses bei schräger Betrachtung als heller Fleck ("Spot") zu sehen, es kommt zu Leuchtdichteinhomogenitäten in den beiden Lichtleiterästen vor allem im Strahlteilbereich und der Wirkungsgrad wird durch Verluste aufgrund der unvollständigen Umlenkung des Lichts um 90° am Luftprisma verringert. Beim Aufteilen durch eine Gabelung wird oft wegen des flachen Einfallswinkels des Lichts zu wenig Licht in diesem Bereich ausgekoppelt.

Aus der DE 10 2004 059 741 A1 oder aus der DE 10 2007 013 082 A1 sind Leuchtanordnungen der eingangs genannten Art bekannt geworden. Dank der wulstförmigen Abstrahlstellen kann auch im Gabelungsbereich gezielt Licht abgestrahlt werden. Dadurch ergibt sich zwar eine bessere Homogenität des Leuchtbildes, doch bleibt die Ausbildung der Gabelung sowohl lichttechnisch als auch im Hinblick auf die Fertigung und die mechanische Festigkeit nach wie vor nicht unproblematisch.

Es ist eine Aufgabe der Erfindung, die verbleibenden Inhomogenitäten der Leuchtdichte soweit wie möglich zu vermeiden, sodass die gesamte Leuchte gleichmäßig ausgeleuchtet erscheint und ein gefälliges Erscheinungsbild erzeugt, was insbesondere im Außenbereich eines Fahrzeuges essentiell ist.

Diese Aufgabe wird mit einer Leuchtanordnung der eingangs genannten Art erreicht, bei welcher erfindungsgemäß in der Gabelung ein keilförmiger Leuchtkörper angeordnet ist, wobei zwei Seiten des Leuchtkörpers der Krümmung und dem Durchmesser der Lichtleiter angepasst und an diese unter Belassung eines Luftspalts angeschmiegt sind.

Dank der Erfindung kann auch in dem kritischen Gabelungsbereich genug Licht abgestrahlt werden, wobei man es in der Hand hat, über den Durchmesser, ganz allgemein über die Geometrie der wulstförmige Abstrahlstellen und des Leuchtkörpers sowie auch der Störstellen die Helligkeit entsprechend der Vorgaben vor allem hinsichtlich der Krümmung der Lichtleiter, zu steuern. Es ist anzumerken, dass die Leuchtanordnung nach der Erfindung eine Lichtfigur erzeugen kann, die gesetzlichen Regelungen, wie ECE, SAE, CC und dgl., entspricht. Aus der US 2002/0102058 A1 ist zwar bei einem aus zwei Lichtleitern bestehenden Becherhalter gleichfalls ein keilförmiger Beleuchtungsteil im Gabelungsbereich ausgebildet, so dass kein Luftspalt verbleibt und die bei der Erfindung mögliche Homogenität des Leuchtbildes weder angestrebt noch erreichbar ist.

Bei zweckmäßigen Ausführungsformen ist vorgesehen, dass die wulstförmigen Abstrahlstellen im Wesentlichen in Umfangsrichtung der Lichtleiter und/oder im Wesentlichen parallel zueinander verlaufen.

Eine weitere Verbesserung des Erscheinungsbildes kann sich ergeben, wenn die dritte Seite des Leuchtkörpers konkav gekrümmt ist und im Wesentlichen stetig verlaufend in die Krümmung der Lichtleiter übergeht. Dank dieser Merkmale erscheinen die Lichtleiter-Abschnitte für einen Betrachter einheitlich und ergeben ein gefälliges Erscheinungsbild.

Im Sinne es guten Lichtübertritts in den Leuchtkörper ist es empfehlenswert, dass an den beiden den Lichtleitern zugewandten Seiten des Leuchtkörpers wulstförmige Abstrahlstellen ausgebildet sind, die in zweckmäßiger Weise außerdem gegen die wulstförmigen Abstrahlstellen der beiden Lichtleiter versetzt sind.

Eine konstruktiv einfache und zweckmäßige Variante zeichnet sich dadurch aus, dass die wulstförmigen Abstrahlstellen der Lichtleiter und oder des Leuchtkörpers als Erhebungen ausgebildet sind.

Im Allgemeinen ist es empfehlenswert, wenn die Störstellen als Prismenstruktur ausgebildet sind.

Auch ist es ratsam, dass die Lichtleiter an der Einspeisestelle eine gemeinsame Lichteintrittsfläche besitzen, wobei die beiden Lichtleiter an der Einspeisestelle mit Vorteil einstückig ausgebildet sein können. Hierbei hat es sich als günstig erwiesen, wenn der Abstand a der Mittelpunkte der beiden Lichtleiter an der Einspeisestelle zwischen 1/4 und 3/2 des Radius a der Lichtleiter beträgt.

Die Erfindung samt weiteren Vorteilen ist im Folgenden an Hand beispielsweiser Ausführungen näher erläutert, die in der Zeichnung veranschaulicht sind. In dieser zeigen
Fig. 1 eine Leuchtanordnung nach der Erfindung in schaubildlicher Darstellung von schräg vorne,
Fig. 2 die Leuchtanordnung nach Fig. 1 in schaubildlicher Darstellung von schräg hinten,
Fig. 3 in einem Detail den Gabelungsbereich der beiden Lichtleiter der Leuchtanordnung nach Fig. 1,
Fig. 4 in einem Detail, ähnlich Fig. 3, den Gabelungsbereich und einen keilförmigen Leuchtkörper vor dessen Befestigung an den Lichtleitern,
Fig. 5 in einer Ansicht wie Fig. 4 den Gabelungsbereich nach Befestigung des Leuchtkörpers,
Fig. 6 eine Detailansicht der Leuchte in Richtung der Lichteinkoppelfläche,

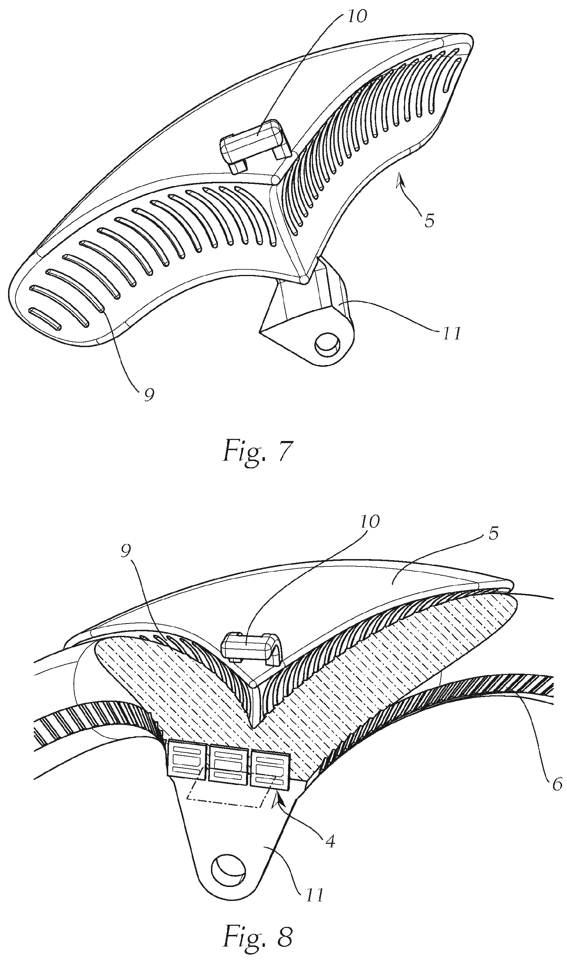

Fig. 7 in schaubildlicher Darstellung einen Leuchtkörper, gesehen in Richtung seiner zwei Seiten mit Lichteinkoppelflächen,
Fig. 8 in schaubildlicher Darstellung den Gabelungsbereich mit eingesetztem Leuchtkörper, wobei die beiden Leuchtstäbe schräg geschnitten sind,
Fig. 9 im Detail den Gabelungsbereich ähnlich der Ansicht der Fig. 8 mit einem schrägen Schnitt durch den Leuchtkörper und die Leuchtstäbe und eingezeichnetem Verlauf von zwei beispielhaften Lichtstrahlen,
Fig. 10 das Detail X der Fig. 9 und
Fig. 11 das Detail XI der Fig. 9.

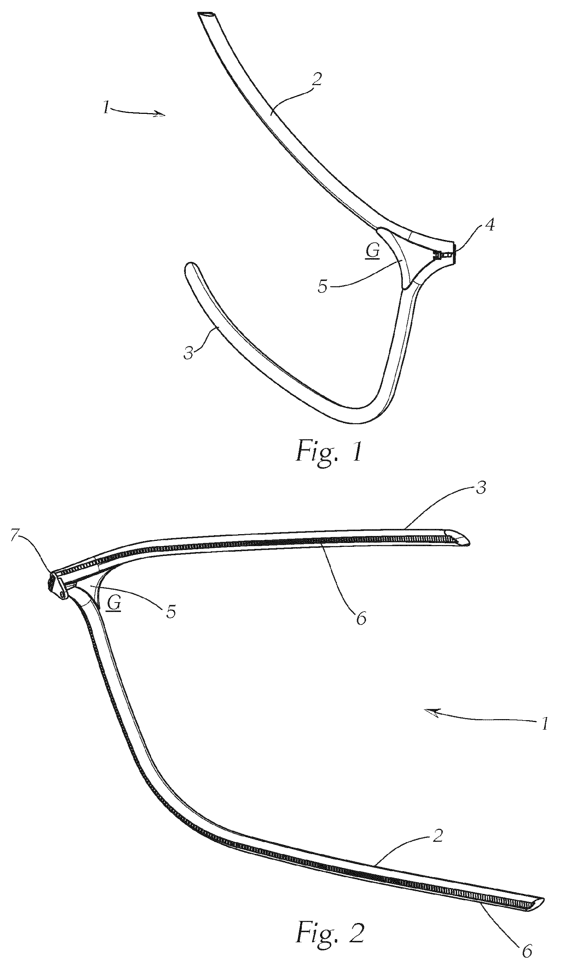

Es wird nun auf die Zeichnungen Bezug genommen, in welchen Fig. 1 und 2 ein Ausführungsbeispiel einer erfindungsgemäßen Leuchtanordnung 1 zeigt, die zwei Lichtleiter 2, 3, eine Lichtquelle 4 sowie optional einen Leuchtkörper 5 besitzt. Die Lichtleiter 2, 3 weisen eine bestimmte Form mit unterschiedlichen Krümmungen auf, wobei diese Form durch den Einsatzzweck bestimmt ist und es selbstverständlich möglich ist, dass beide Lichtleiter die gleiche Gestalt aufweisen oder spiegelsymmetrisch zueinander verlaufen. Beispielsweise sollen die Lichtleiter der Kontur eines Scheinwerfers folgen und diesen in Form eines im Betrieb leuchtenden Bandes einrahmen. In bekannter Weise besitzen die Lichtleiter 2, 3 im Wesentlichen an ihren Innenseiten eine Struktur aus Störstellen 6, die im Allgemeinen als Prismen oder prismenähnlich ausgebildet sind. Im gezeigten Beispiel besitzen die Lichtleiter 2, 3 einen - meist bevorzugten - kreisförmigen Querschnitt, doch könnte der Querschnitt beispielsweise auch elliptisch oder anders geformt sein.

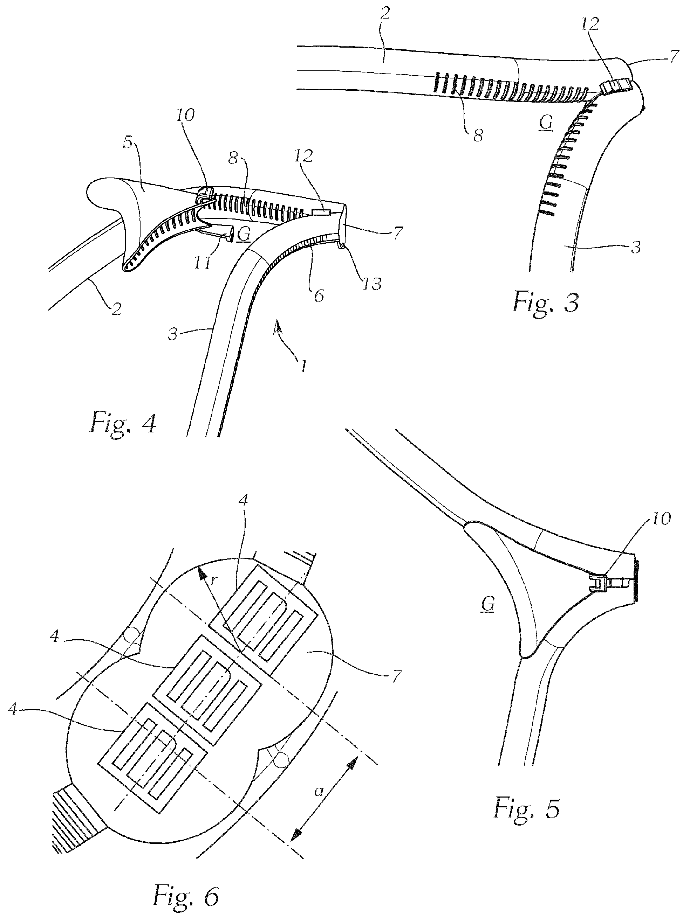

Nun auf die Fig. 3 bis 6 kommend erkennt man, dass die Lichtleiter 2, 3 an einer Licht-Einspeisestelle eine gemeinsame Lichteintrittsfläche 7 besitzen, wobei die beiden Lichtleiter 2, 3 bei dem dargestellten Ausführungsbeispiel an der Einspeisestelle einstückig ausgebildet sind und der Abstand a ihrer Mittelpunkte dort etwa das 1,2-fache ihres jeweiligen Radius r beträgt (Fig. 6). Im Extremfall können die Einkoppelstellen beider Lichtleiter auch zusammenfallen, d.h. der Abstand a ist gleich Null. Die Einstückigkeit an der Einspeisestelle ist ebenfalls keine Notwendigkeit, d.h. die Lichtleier 2, 3 können an der Einspeisestelle getrennt voneinander sein. An der Lichteintrittsfläche 7 sitzt die, bei diesem Ausführungsbeispiel aus drei LEDs bestehende, Lichtquelle 4. Es versteht sich, dass die Lichtquelle, wie dem Fachmann bekannt, auch anders ausgeführt sein kann und nicht auf den Einsatz von LEDs beschränkt ist.

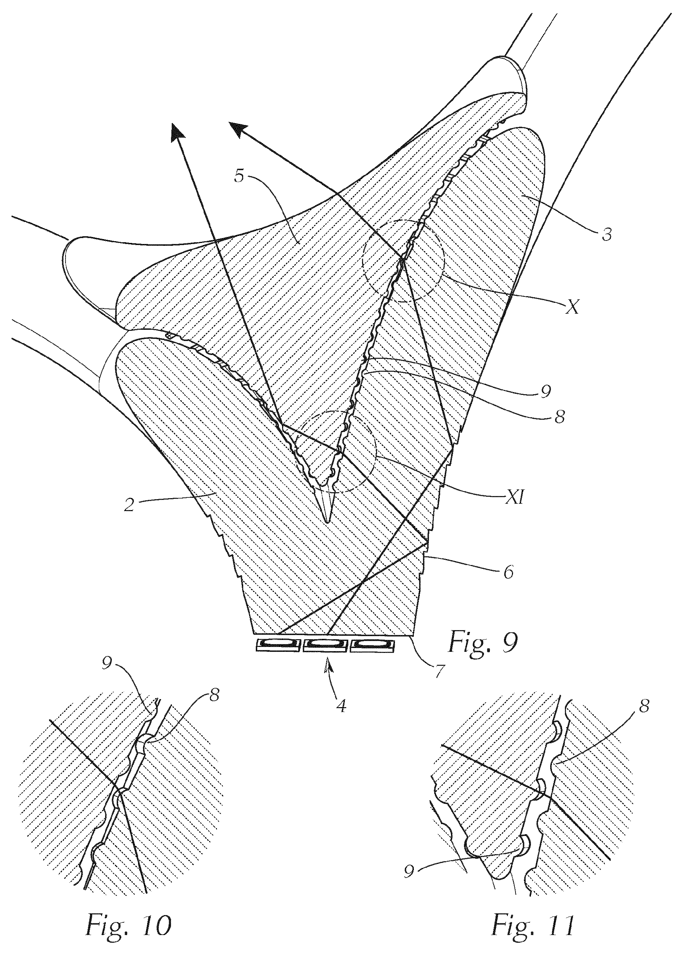

Ausgehend von der gemeinsamen Lichteintrittsfläche 7 verzweigen sich die beiden Lichtleiter 2, 3 in einer Gabelung G und nehmen dann getrennt je die in Fig. 1 und 2 gut ersichtlichen Verläufe. Im Bereich der Gabelung G sind an den einander zugewandten Außenflächen der beiden Lichtleiter 2, 3 wulstförmige Abstrahlstellen 8 ausgebildet, deren beispielsweise Anordnung und Form im Detail den Fig. 9 bis 11 entnehmbar ist. Die Abstrahlstellen 8 sind bei dem gezeigten Ausführungsbeispiel als Erhebungen gestaltet und verlaufen im Wesentlichen in Umfangsrichtung der Lichtleiter und/ oder im Wesentlichen parallel zueinander. Im Prinzip können jedoch auch wulstförmige Vertiefungen als Abstrahlstellen verwendet werden. Es sei hier darauf hingewiesen, dass der verwendete Begriff "Außenflächen" nicht in irgendeiner Weise einschränkend zu verstehen ist, sondern lediglich darauf hinweisen soll, dass diese "Außenfläche" zumindest annähernd den Störstellen 6 gegenüberliegen und somit das Licht von diesen Flächen abgestrahlt wird. Generell ist anzumerken, dass sich Lagebeziehungen, wie "vorne", "hinten" etc. immer auf die Einbaulage der Leuchtanordnung beziehen.

Dank der wulstförmigen Abstrahlstellen 8 kann auch in dem kritischen Bereich der Gabelung G genug Licht abgestrahlt werden, wobei man über den Durchmesser, ganz allgemein über die Geometrie der Erhebungen 8 die Helligkeit im gewünschten Ausmaß steuern kann.

Im Sinne einer weiteren Verbesserung des Leuchtbildes kann der Leuchtkörper 5 verwendet werden, welcher in der Gabelung G angeordnet ist, wobei zwei Seiten des im Prinzip keilförmig ausgebildeten Leuchtkörpers 5 der Krümmung und dem Durchmesser der Lichtleiter 2, 3 angepasst und an diese angeschmiegt sind. Dabei muss zwischen dem Leuchtkörper 5 und den Lichtleitern 2, 3 ein Luftspalt belassen werden, der im Bereich zwischen wenigen 1/100 mm bis in den mm-Bereich liegt. Die dritte Seite des Leuchtkörpers 5 ist, wie am besten aus den Fig. 4 und 5 hervorgeht, konkav gekrümmt und geht im Wesentlichen stetig verlaufend in die Krümmung der Lichtleiter 2, 3 über. In dem gezeigten Ausführungsbeispiel ist der Leuchtkörper 5 an der dritten Seite konkav ausgebildet, es soll jedoch klar sein, dass der Verlauf dieser Seite von dem Verlauf der beiden Lichtleiter 2, 3 abhängt und die dritte Seite dementsprechend auch gerade oder konvex sein kann. Um einem flachen Eintrittswinkel entgegenzuwirken und damit ein besseres Eintreten von Lichtstrahlen in den Leuchtkörper zu bewirken, sind an den beiden, den Lichtleitern 2, 3 zugewandten Seiten des Leuchtkörpers 5 wulstförmige Abstrahlstellen 9 ausgebildet, welch prinzipiell den wulstförmige Abstrahlstellen 8 der Lichtleiter 2, 3 gleichen und daher ebenso als wulstförmige Vertiefungen gestaltet werden können. Dabei sind die wulstförmigen Abstrahlstellen 9 des Leuchtkörpers 5 gegen die wulstförmigen Abstrahlstellen 8 der beiden Lichtleiter 2, 3 versetzt; die Erhebungen 8, 9 greifen sozusagen kammartig ineinander. Der Begriff "wulstförmig" soll nicht einschränkend auf die dargestellten "runden" Querschnitte dieser Abstrahlstellen 8 bzw. 9 verstanden sein. Ob eine eher runde oder prismatische Struktur dieser Abstrahlstellen verwendet wird, hängt im Einzelfall von der gewünschten Abstrahlcharakteristik ab.

Wie ersichtlich verlaufen die Abstrahlstellen 8 der Lichtleiter 2, 3 lediglich über einen Teil des Umfangs, meist in einem bevorzugten Bereich von 5° bis 180°. Weiters müssen weder die Abstrahlstellen 8 der Lichtleiter 2, 3 noch die Abstrahlstellen 9 an dem Leuchtkörper 5 gleich gestaltet sein, sie können auch von unterschiedlicher Natur sein. So kann beispielsweise bei runden Abstrahlstellen deren Radius variiert werden und ebenso die Winklerstreckung über den Umfang der Lichtleiter, und auch ihre Abstände können unterschiedlich sein. Beispielsweise kann die Dichte der Abstrahlstellen 8, 9 in Nähe der Einkoppelstelle der Lichtquelle groß sein und von hier aus längs der Lichtleiter abnehmen, was sinngemäß auch für die Abstrahlstellen 9 des Leuchtkörpers 5 gilt. Es können als Abstrahlstellen auch Erhebungen an den Lichtleitern 2, 3 und Vertiefungen an dem Leuchtkörper 5 oder umgekehrt vorgesehen sein. Beispielsweise Strahlenverläufe sind aus den Fig. 9, 10 und 11 ersichtlich. An dem Leuchtkörper 5 können auch weitere optische Mittel vorgesehen sein, um das emittierte Strahlenbündel zu beeinflussen.

Der Leuchtkörper 5 trägt bei dieser Ausführungsform ein erstes und ein zweites Befestigungselement 10 und 11, wobei diese Befestigungselemente mit korrespondierenden Befestigungselementen 12 und 13, die im inneren Gabelungsbereich an den beiden Lichtleitern sitzen, zusammenwirken können. Zur Erleichterung der Montage können die Befestigungselemente 10 bis 13 im Sinne einer Schnappverbindung ausgestaltet sein. In Hinblick auf den oben erwähnten Luftspalt müssen die Befestigungsmittel so gestaltet und bemessen werden, dass dieser Luftspalt eingehalten wird. Der Leuchtkörper 5 kann selbstverständlich auch auf beliebige andere Weise an Ort und Stelle gehalten werden, z.B. durch Verkleben, doch sollte darauf geachtet werden, dass die Befestigungsmittel das Leuchtbild nicht beeinträchtigen.

In der Praxis ist eine oben beschriebene Leuchtanordnung in einem Gehäuse vorgesehen, das auch ein abdichtendes Abdeckglas besitzt. Vor den Lichtleitern kann zusätzlich eine Blende angeordnet sein, die entweder klar transparent, als Milchglas (durchscheinend) oder als zusätzliche Optik ausgebildet ist, um beispielsweise eine weitere Erhöhung der Homogenität oder zusätzliche optische Effekte zu erzielen.

## Patentansprüche

1. Leuchtanordnung (1) für Fahrzeuge, mit zwei Lichtleitern (2, 3) und einer Lichtquelle (4), wobei die Lichtquelle beiden Lichtleitern zu Einspeisung von Licht zugeordnet ist, die Lichtleiter zur Führung des Lichts und zur Abstrahlung von Licht auf Grund von an Innenseiten der Lichtleiter vorgesehenen Störstellen (6) ausgebildet sind, die Lichtleiter von der gemeinsamen Einspeisestelle in einer Gabelung (G) gekrümmt auseinanderlaufen undim Bereich der Gabelung (G) an den einander zugewandten Außenflächen der beiden Lichtleiter (2, 3) wulstförmige Abstrahlstellen (8) ausgebildet sind,
**dadurch gekennzeichnet, dass**
in der Gabelung (G) ein keilförmiger Leuchtkörper (5) angeordnet ist, wobei zwei Seiten des Leuchtkörpers der Krümmung und dem Durchmesser der Lichtleiter (2,3) angepasst und an diese unter Belassung eines Luftspaltes angeschmiegt sind.

2. Leuchtanordnung (1) nach Anspruch 1, **dadurch gekennzeichnet, dass** die wulstförmigen Abstrahlstellen (8) im Wesentlichen in Umfangsrichtung der Lichtleiter (2, 3) verlaufen.

3. Leuchtanordnung (1) nach Anspruch 1 oder 2, **dadurch gekennzeichnet, dass** die wulstförmigen Abstrahlstellen (8) im Wesentlichen parallel zueinander verlaufen.

4. Leuchtanordnung (1) nach Anspruch 1, **dadurch gekennzeichnet, dass** die dritte Seite des Leuchtkörpers (5) konkav gekrümmt ist und im Wesentlichen stetig verlaufend in die Krümmung der Lichtleiter (2, 3) übergeht.

5. Leuchtanordnung (1) nach Anspruch 1 oder 4, **dadurch gekennzeichnet, dass** an den beiden den Lichtleitern (2, 3) zugewandten Seiten des Leuchtkörpers (5) wulstförmige Abstrahlstellen (9) ausgebildet sind.

6. Leuchtanordnung (1) nach Anspruch 5, **dadurch gekennzeichnet, dass** die wulstförmige Abstrahlstellen (9) des Leuchtkörpers (5) gegen die wulstförmigen Abstrahlstellen (8) der beiden Lichtleiter (2, 3) versetzt sind.

7. Leuchtanordnung (1) nach einem der Ansprüche 1 bis 6, **dadurch gekennzeichnet, dass** die wulstförmigen Abstrahlstellen (8, 9) der Lichtleiter (2,3) und oder des Leuchtkörpers (5) als Erhebungen ausgebildet sind.

8. Leuchtanordnung (1) nach Anspruch 1, **dadurch gekennzeichnet, dass** die Störstellen (6) als Prismen ausgebildet sind.

9. Leuchtanordnung (1) nach Anspruch 1, **dadurch gekennzeichnet, dass** die Lichtleiter (2, 3) an der Einspeisestelle eine gemeinsame Lichteintrittsfläche (11) besitzen.

10. Leuchtanordnung (1) nach Anspruch 8, **dadurch gekennzeichnet, dass** die beiden Lichtleiter (2, 3) an der Einspeisestelle einstückig ausgebildet sind.

11. Leuchtanordnung (1) nach Anspruch 9, **dadurch gekennzeichnet, dass** der Abstand a der Mittelpunkte der beiden Lichtleiter (2, 3) an der Einspeisestelle zwischen 1/4 und 3/2 des Radius a der Lichtleiter beträgt.

## Claims

1. A lighting assembly (1) for vehicles, having two light conductors (2, 3) and a light source (4), wherein the light source is associated with both light conductors to feed light, the light conductors are designed to guide light and to emit light on the basis of imperfections (6) provided at the inner sides of the light conductors, the light conductors branch away from one another in a curved manner from the common feed point in a forking (G), and bead-like emission points (8) are formed in the region of the forking (G) on the outer faces of the two light conductors (2, 3) facing towards one another,
**characterised in that**
a wedge-shaped luminous body (5) is arranged in the forking (G), wherein two sides of the luminous body are adapted to the curvature and to the diameter of the light conductors (2, 3) and are nestled thereagainst, leaving an air gap.

2. The lighting assembly (1) according to claim 1, **characterised in that** the bead-like emission points (8) run substantially in the peripheral direction of the light conductors (2, 3).

3. The lighting assembly (1) according to claim 1 or 2, **characterised in that** the bead-like emission points (8) run substantially parallel to one another.

4. The lighting assembly (1) according to claim 1, **characterised in that** the third side of the luminous body (5) is concavely curved and transitions into the curvature of the light conductors (2, 3) in a substantially continuously running manner.

5. The lighting assembly (1) according to claim 1 or 4, **characterised in that** bead-like emission points (9) are formed on the two sides of the luminous body (5) facing towards the light conductors (2, 3).

6. The lighting assembly (1) according to claim 5, **characterised in that** the bead-like emission points (9) of the luminous body (5) are offset with respect to the bead-like emission points (8) of the two light conductors (2, 3).

7. The lighting assembly (1) according to any one of claims 1 to 6, **characterised in that** the bead-like emission points (8, 9) of the light conductors (2, 3) and/or of the luminous body (5) are formed as elevations.

8. The lighting assembly (1) according to claim 1, **characterised in that** the imperfections (6) are formed as prisms.

9. The lighting assembly (1) according to claim 1, **characterised in that** the light conductors (2, 3) have a common light entry face (11) at the feed point.

10. The lighting assembly (1) according to claim 8, **characterised in that** the two light conductors (2, 3) are formed in one piece at the feed point.

11. The lighting assembly (1) according to claim 9, **characterised in that** the distance a between the centres of the two light conductors (2, 3) at the feed point is between 1/4 and 3/2 of the radius a of the light conductors.

## Revendications

1. - Dispositif d'éclairage (1) pour véhicules, comportant deux guides de lumière (2, 3) et une source lumineuse (4), la source lumineuse étant associée aux deux guides de lumière pour l'introduction de lumière, les guides de lumière étant formés pour le guidage de la lumière et pour le rayonnement de lumière sur la base de défauts (6) prévus sur les côtés intérieurs des guides de lumière, les guides de lumière divergeant en étant courbés dans une fourche (G) depuis l'emplacement d'alimentation commun, et des emplacements de rayonnement (8) en forme de bourrelet étant réalisés dans la région de la fourche (G) sur des surfaces extérieures tournées l'une vers l'autre des deux guides de lumière (2,3),
**caractérisé par le fait que**
dans la fourche (G) est disposé un corps lumineux (5) en forme de coin, deux côtés du corps lumineux étant ajustés à la courbure et au diamètre des guides de lumière (2, 3) et adaptés à ceux-ci en laissant un intervalle d'air.

2. - Dispositif d'éclairage (1) selon la revendication 1, **caractérisé par le fait que** les emplacements de rayonnement (8) en forme de bourrelet s'étendent sensiblement dans la direction circonférentielle des guides de lumière (2, 3).

3. - Dispositif d'éclairage (1) selon l'une des revendications 1 ou 2, **caractérisé par le fait que** les emplacements de rayonnement (8) en forme de bourrelet s'étendent sensiblement parallèlement les uns aux autres.

4. - Dispositif d'éclairage (1) selon la revendication 1, **caractérisé par le fait que** le troisième côté du corps lumineux (5) est courbé de façon concave et se prolonge dans la courbure des guides de lumière (2, 3) en s'étendant sensiblement de façon continue.

5. - Dispositif d'éclairage (1) selon l'une des revendications 1 ou 4, **caractérisé par le fait que** des emplacements de rayonnement (9) en forme bourrelet sont réalisés sur les deux côtés du corps lumineux (5) tournés vers les guides de lumière (2, 3).

6. - Dispositif d'éclairage (1) selon la revendication 5, **caractérisé par le fait que** les emplacements de rayonnement (9) en forme de bourrelet du corps lumineux (5) sont décalés par rapport aux emplacements de rayonnement (8) en forme de bourrelet des deux guides de lumière (2, 3).

7. - Dispositif d'éclairage (1) selon l'une des revendications 1 à 6, **caractérisé par le fait que** les emplacements de rayonnement (8, 9) en forme de bourrelet des guides de lumière (2, 3) et/ou du corps lumineux (5) sont réalisés sous la forme de bosses.

8. - Dispositif d'éclairage (1) selon la revendication 1, **caractérisé par le fait que** les défauts (6) sont réalisés sous la forme de prismes.

9. - Dispositif d'éclairage (1) selon la revendication 1, **caractérisé par le fait que** les guides de lumière (2, 3) possèdent une surface d'entrée de lumière (11) commune à l'emplacement d'introduction.

10. - Dispositif d'éclairage (1) selon la revendication 8, **caractérisé par le fait que** les deux guides de lumière (2, 3) sont réalisés d'un seul tenant à l'emplacement d'introduction.

11. - Dispositif d'éclairage (1) selon la revendication 9, **caractérisé par le fait que** la distance a des centres des deux guides de lumières (2, 3) à l'emplacement d'introduction s'élève entre 1/4 et 3/2 du rayon a des guides de lumière.
